# EUROPÄISCHE PATENTSCHRIFT

(11) **EP 3 894 300 B1**
(45) Veröffentlichungstag und Bekanntmachung des Hinweises auf die Patenterteilung: **28.12.2022**
(21) Anmeldenummer: 20715669.6
(22) Anmeldetag: 30.01.2020
(51) Int. Cl.: B62B 5/04

(54) **TRANSPORTWAGEN**
TRANSPORT TROLLEY
CHARIOT DE TRANSPORT

(30) Priorität: 06.02.2019 DE 102019102876
(43) Veröffentlichungstag der Anmeldung: 20.10.2021
(73) Patentinhaber: Henkst, Peter, 33165 Lichtenau-Atteln (DE)
(72) Erfinder: Henkst, Peter, 33165 Lichtenau-Atteln (DE)
(74) Vertreter: Brandt, Detlef
(86) Internationale Anmeldenummer: PCT/DE2020/100058
(87) Internationale Veröffentlichungsnummer: WO 2020/160728

(56) Entgegenhaltungen:
- CH-A- 350 774
- DE-A1-102014 006 890
- DE-B4-102014 006 890
- US-A- 2 557 183

## Beschreibung

### Technisches Umfeld

Die Erfindung betrifft einen Transportwagen mit einem Plattformaufbau, an dessen dem Boden zugewandter Unterseite eine Mehrzahl von Fahrrollen in Lagerböcken drehbar aufgenommen sind, wobei mindestens zwei Fahrrollen durch eine mittels eines handbetätigten Zugbügels zum Verschieben des Transportwagens ansteuerbare Bremsvorrichtung derart blockierbar sind, dass ein Absenken des Zugbügels in Richtung des Bodens die Blockierstellung der Bremsvorrichtung aufhebt.

### Stand der Technik

Transportwagen mit den eingangs geschilderten gattungsgemäßen Merkmalen dienen oftmals dazu, im gewerblichen und industriellen Bereich Waren zu transportieren. Um ungewollte Bewegungen derartiger Transportwagen insbesondere auf schrägen Ebenen zu verhindern, sind unterschiedliche Ausgestaltungen von Bremsvorrichtungen entwickelt worden, die in aller Regel prinzipiell ihre Aufgaben erfüllen.

So ist aus der US 5,628,522 A1 ein Transportwagen bekannt, der mit Rollen ausgestattet ist. Die Rollen sind gegenüber dem Transportgestell nach unten ausschwenkbar angeordnet, so dass bei ausgeschwenkten Rollen der Transportwagen verfahrbar ist. Die Rollen werden mittels eines Zugbügels ausgeschwenkt.

Bei Nichtgebrauch des Zugbügels verschwenkt dieser automatisch zurück, so dass die Rollen vom Boden abheben und das Transportgestell selbst auf dem Boden aufliegt.

Neben der beispielhaft geschilderten Ausgestaltung sind auch für andere Anwendungsfälle Konstruktionen bekannt, bei denen beispielsweise Basketballkörbe oder Sonnenschirmständer mittels verschwenkbarer Rollen in eine Transportstellung und eine Bremsstellung gebracht werden können.

So ist beispielsweise aus der US 7,118,500 B2 ein verfahrbarer Basketballkorb bekannt, der mit einer plattenförmigen Basis ausgestattet ist, an welcher über einen Lagerbock eine absenkbare bzw. in der Höhe verstellbare Rolle drehbar gelagert ist. Über einen manuell bedienbaren Zugbügel kann die Basis durch Herunterdrücken des Zugbügels angehoben werden, so dass eine freie Beweglichkeit der verstellbaren Rollen gegeben ist. Durch Loslassen des Zugbügels wird die Basis automatisch auf den Boden abgesenkt und kommt auf diesem zum Liegen.

Aus der DE 10 2014 006 890 B4 ist ein mobiler Ständer mit einem Standfuß bekannt, welcher mittels Rollen verfahrbar ist. Die Rollen können über einen Verstellmechanismus gegenüber dem Standfuß verlagert werden, so dass der Standfuß vom Boden abhebt. Hierzu wird ein Rohr als Zugbügel verwendet, so dass bei einem Herunterdrücken des Rohres der Standfuß vom Boden abhebt und ein Loslassen ein automatisches Zurücksinken des Standfußes auf dem Boden bewirkt.

Die US2557183 offenbart eine Transportwagen bei dem mit dem Zugbügel der Wagen von den hinteren Laufrollen aufgehoben wird und danach der Wagen bewegt werden kann.

Allen geschilderten Konstruktionen ist gemeinsam, dass die mechanisch realisierte Bewegung und Blockierung der Fahrrollen mit einem nicht unerheblichen konstruktiven Aufwand verbunden ist. Dieser konstruktive Aufwand ist naturgemäß mit nicht unerheblichen Kosten für die Herstellung der Einzelteile und die Montage der Gesamtvorrichtung verbunden.

### Aufgabe der Erfindung

Aufgabe der vorliegenden Erfindung ist es daher, ausgehend von den verschiedenen aus dem Stand der Technik bekannten Transportwagen mit entsprechenden handbetätigten Bremsvorrichtungen einen Transportwagen mit den oben geschilderten gattungsgemäßen Merkmalen so weiter zu entwickeln, dass mit einfachsten Mitteln eine zuverlässig wirkende Bremsvorrichtung an einem derartigen Transportwagen realisiert werden kann, die in Sekundenbruchteilen nach Loslassen des Zugbügels ein unmittelbares Blockieren der Transportwagenbewegung herbeiführt.

Da der erfindungsgemäße Transportwagen im Rahmen einer bevorzugten Anwendung auf Flugfeldern eingesetzt werden soll, sind hierbei die besonders strengen Anforderungen des Flugverkehrs zusätzlich zu berücksichtigen.

### Lösung der Aufgabe

Die oben geschilderte Aufgabe wird für einen Transportwagen mit einem Plattformaufbau, der sich durch die oben beschriebenen gattungsgemäßen Merkmale auszeichnet, durch die im kennzeichnenden Teil des Anspruches 1 offenbarte technische Lehre gelöst.

Erfindungswesentlich dabei ist es, dass der Zugbügel am Plattformaufbau in zwei Drehlagern schwenkbar gelagert und mit einem Lagerrahmen, an welchen die beiden blockierbaren Fahrrollen in den jeweiligen Lagerböcken festgelegt sind, fest verbunden ist, wobei der Lagerrahmen mittels Führungszapfen in Aufnahmen am Plattformaufbau vertikal verschieblich geführt sind und am Plattformaufbau Bremselemente angeordnet sind, welche in der Blockierstellung der Bremsvorrichtung die Lauffläche der jeweils blockierbaren Fahrrollen kontaktieren.

Die erfindungsgemäße Realisierung zeichnet sich dadurch aus, dass lediglich ein durch den Zugbügel bewegliches Bauteil in Form des Lagerrahmens im wesentlichen die Bremsvorrichtung ausmacht. Die zum Lagerrahmen gehörenden Lagerböcke mit den Fahrrollen sind übliche am Markt kostengünstige verfügbare Anbauteile und die entsprechenden Lagerungen und Führungselemente in Form der beiden Drehlager zur Anlenkung des Lagerrahmens am Plattformaufbau sowie die zur kontrollierten vertikalen Bewegung des Lagerrahmens vorgesehenen Führungszapfen sind konstruktiv einfach gestaltet und kostengünstig realisierbar. Die Bremswirkung selbst wird durch ein Absenken des Plattformaufbaus herbeigeführt durch unmittelbare Einwirkung der Bremselemente auf die Lauffläche der zu blockierenden Fahrrollen.

Entsprechend einer vorteilhaften Weiterbildung des Gegenstandes der Erfindung können die Bremselemente als vertikal verstellbare Einstellschrauben ausgebildet werden. Die Höhenverstellung der Einstellschrauben ermöglicht zum einen eine Einstellung der Bremskräfte und zum anderen eine unmittelbare Beeinflussung der Bremszeit. Diese ist im Wesentlichen durch den Abstand der Einstellschraube von der Oberfläche der Fahrrolle im unblockierten Zustand der Bremsvorrichtung bestimmt, in der die Fahrrollen durch die Betätigung des Zugbügels abgesenkt sind. Beim Loslassen des Zugbügels wird durch das Eigengewicht des Plattformaufbaus dieser abgesenkt, so dass die Bremselemente in Form der Einstellschrauben auf die Lauffläche der Fahrrollen drücken.

Beträgt der Abstand im unblockierten Zustand zwischen Einstellschraube und Oberfläche der Fahrrolle entsprechend ein sehr geringes Maß, so kann wie bei keiner aus dem Stand der Technik bekannten Vorrichtung eine unmittelbare Bremswirkung nach Loslassen des Zugbügels erzielt werden.

Weitere besondere Ausgestaltungen des Gegenstandes der Erfindung ergeben sich in Zusammenschau mit der technischen Lehre des Anspruches 1 zusätzlich aus den Merkmalen der auf den Hauptanspruch rückbezogenen Unteransprüche.

Erfindungsgemäß sind an jedem vertikal verschieblichen Lagerbock zwei vertikal übereinander angeordnete Führungszapfen angeordnet da dadurch unter allen Einsatzbedingungen eine zuverlässige Vertikalführung der Fahrrollen vom unblockierten und den blockierten Zustand gewährleistet ist.

Die Aufnahmen für die Führungszapfen können dabei entsprechend einer vorteilhaften Weiterbildung auf einfachste Weise mittels Langlöcher realisiert werden, in der die Führungszapfen verschieblich sich bewegen können.

Darüber hinaus kann es zweckmäßig sein, wenn das wesentliche Element der Bremsvorrichtung im Gestalt des Lagerrahmens aus einer Traverse mit daran senkrecht zum Boden abstehenden, an den freien Enden der Traverse angeordneten Halteblechen besteht, an denen jeweils Drehlager und mindestens ein Führungsbolzen angeordnet sind.

Der Lagerrahmen ist auf diese Weise durch seine konstruktive Gestaltung als einfache Schweißkonstruktion ausführbar, die sich kostengünstig und stabil herstellen lässt.

### Figurenbeschreibung

Im Folgenden wird ein Ausführungsbeispiel des Gegenstandes der Erfindung anhand der beigefügten Zeichnungen näher erläutert. Es zeigt:
- Figur 1: eine perspektivische Gesamtdarstellung des erfindungsgemäßen Transportwagens,
- Figur 2: eine perspektivische Detaildarstellung des vorderen Teiles des Transportwagens mit der dort angeordneten Bremsvorrichtung und
- Figur 3A, 3B: eine Seitenansicht des vorderen Teiles des Transportwagens in Freigabestellung (Figur 3A) und in Blockierstellung (Figur 3B)

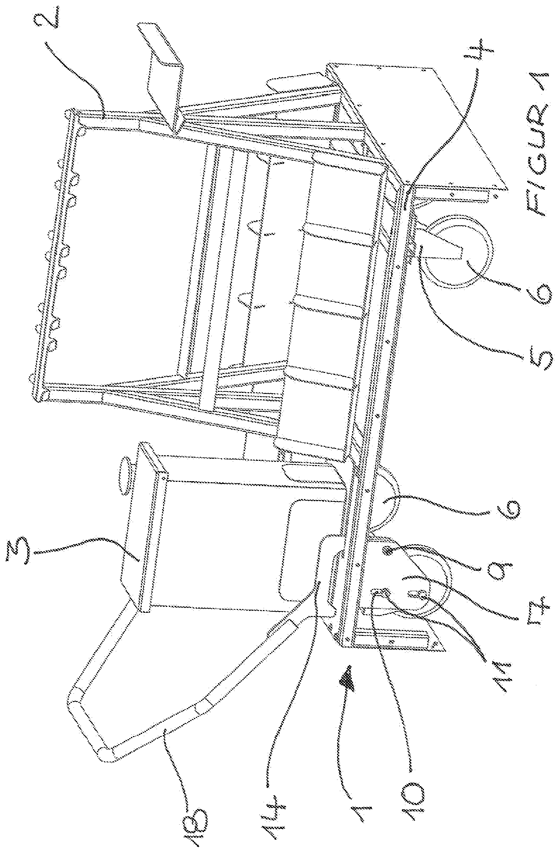

Der in der Figur 1 dargestellte Transportwagen besitzt einen Plattformaufbau 1, auf dem für seinen vorgesehenen Einsatzzweck ein Gestell 2 sowie ein geschlossenes Magazin 3 angeordnet sind. An und auf dem Gestell 2 können unterschiedliche Zubehörteile wie Schocks oder eine Leiter angeordnet werden. Zusätzlich ist neben dem Magazin 3 Platz beispielsweise für eine Reihe von Leitkegeln, im Magazin selbst werden Kleinteile und sonstiges Zubehör angeordnet.

Der in der Figur 1 dargestellte Transportwagen ist für den Einsatz auf Flugplatzrollfeldern vorgesehen. Natürlich ist auch ein anderer Einsatzzweck des Transportwagens möglich, beispielsweise können auf dem Plattformaufbau Waren transportiert werden. Zu diesem Zweck wäre der aus Metallprofilen, beispielsweise aus Aluminium bestehende Plattformaufbau in seiner rechteckigen Ausgestaltung mit einem durchgehenden Transportboden auszustatten. An der Unterseite des Plattformrahmens 4 sind einseitig in entsprechende Aufnahmen zwei in Lagerböcken 5 aufgenommene Fahrrollen 6 angeordnet.

An der gegenüberliegenden Schmalseite des Transportwagens ist dieser konstruktiv anders gestaltet, jedoch ebenfalls mit zwei weiteren in Lagerböcken 5 aufgenommenen Fahrrollen 6 ausgestattet. An dieser Seite befinden sich nach unten zum Boden vorstehend zwei im Wesentlichen dreieckige Haltelaschen 7. Die Haltelaschen 7 sind vorzugsweise an den längsseitigen Profilen 8 des Plattformrahmens 4 angeschweißt.

Jede der beidseitigen Haltelaschen 7 besitzt eine Aufnahmebohrung für ein Drehlager 9 sowie zwei vertikal übereinander angeordnete Ausnehmungen 10 in Form von Langlöchern für darin vertikal bewegliche Führungszapfen 11.

Die Drehlager 9 dienen zur Lagerung zweier Profilteile 12 aus Stahlblech, die im Wesentlichen u-förmig mit einem unteren, dem Boden zugewandten Schenkel 13 und einem parallel beabstandet dazu angeordneten Schenkel 14, die mittels eines Verbindungssteges 15 gekoppelt sind. Im Eckbereich zwischen dem unteren Schenkel 13 und dem Verbindungssteg 15 befindet sich das Drehlager 9, so dass das Profilteil 12 um dieses Drehlager nach oben und unten verschwenkbar ist.

Am freien Ende des oberen Schenkels 14 befindet sich schräg nach oben vorstehend eine Haltenase 16 sowie der Haltenase 16 gegenüber nach unten vorstehend ein Anschlagnocken 17. Die Haltenase 16 dient zur Befestigung für einen Zugbügel 18, der im Wesentlichen u-förmig ausgestaltet ist und die Haltenase 16 der beiden Profilteile 12 miteinander verbindet.

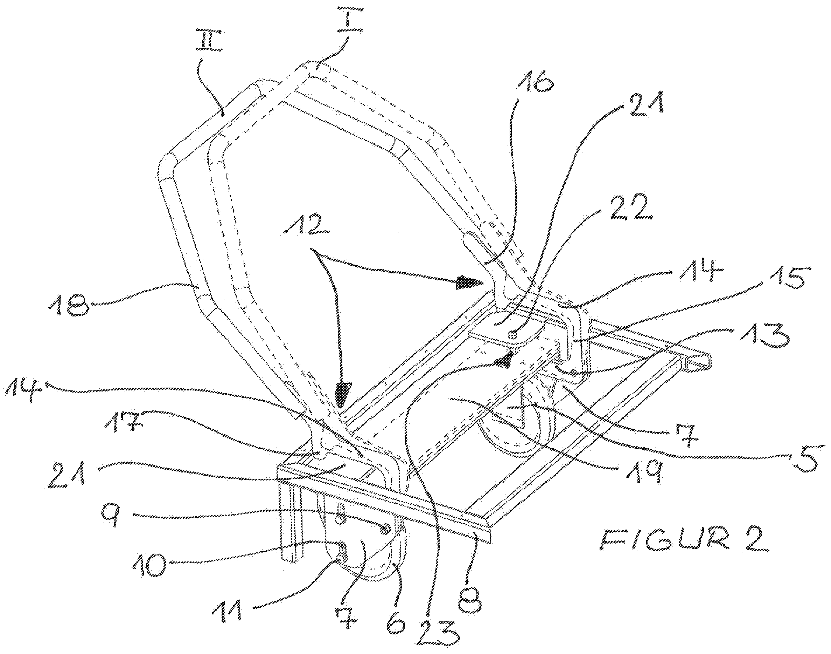

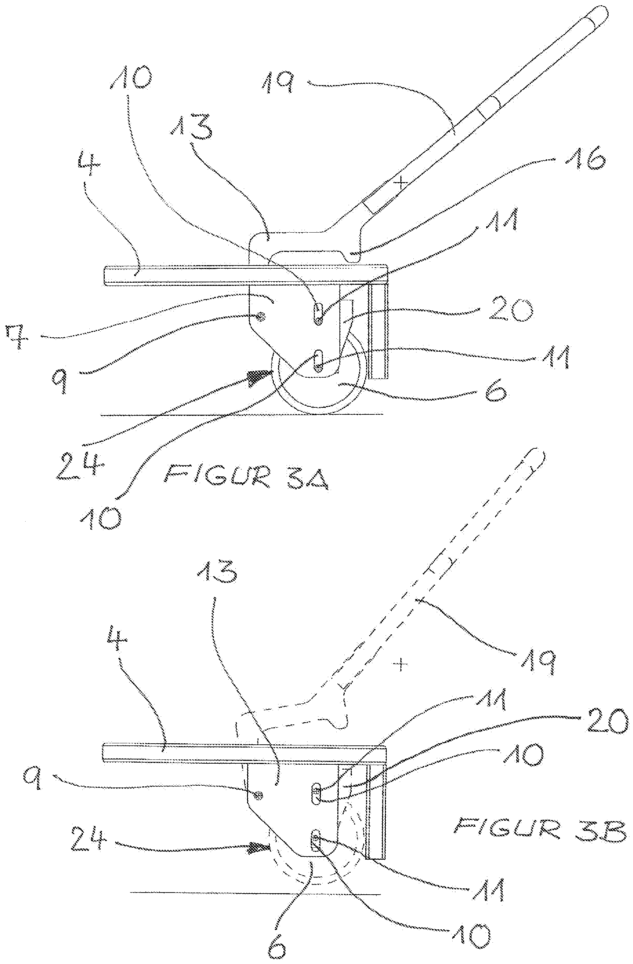

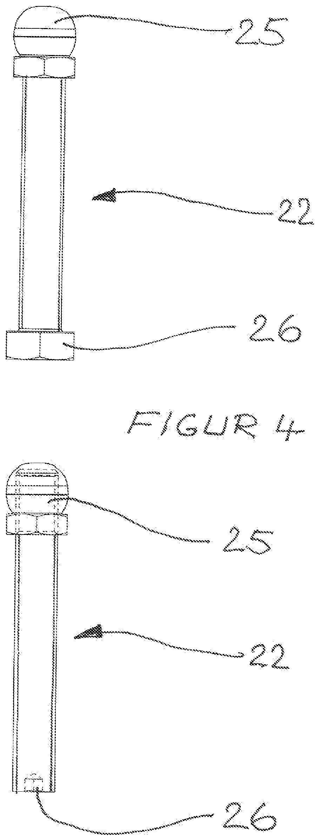

Durch das Drehlager 9 und die Verbindung zwischen Zugbügel 18 und Profilteilen 12 ist der Zugbügel somit in seiner Neigung verschwenkbar, was in der Figur 2 durch die Stellungen I und II verdeutlicht ist. Die entsprechende Stellung I korrespondiert mit der Darstellung der Figur 3B, die Stellung II mit der Darstellung der Figur 3A.

Die beiden unteren Schenkel 14 der Profilteile 12 sind mittels einer Traverse 19 miteinander verbunden. Die Traverse 19 ist im Wesentlichen rechteckförmig ausgebildet, aus Flachstahl gefertigt und besitzt an ihren beiden schmalseitigen Enden Aufnahmebohrungen für jeweils einen Lagerbock 5, in denen entsprechende Fahrrollen 6 aufgenommen sind. An der jeweiligen Außenseite der an der Traverse 19 angeordneten Lagerböcke 5 ist jeweils ein nach unten vorstehendes Halteblech 20 angeordnet. An dem jeweiligen Halteblech 20 befinden sich die Führungszapfen 11, die in die entsprechenden Ausnehmungen 10 an den Haltelaschen 7 eingreifen. Traverse 19, Führungszapfen 11 und Haltebleche 20 bilden dabei gemeinsam einen Lagerrahmen.

Die Gesamtkonstruktion ist so gestaltet, dass durch ein Niederdrücken des Zugbügels 18 sich die Profilteile 12 nach unten bewegen und den an der Traverse 19 angeordneten Lagerrahmen mit den Lagerböcken 5 und den Fahrrollen 6 nach unten drücken. Dabei wird die Bewegung der Fahrrollen 6 nach unten zum Boden durch die Führungszapfen 11 zwangsgeleitet. Ein Loslassen des Zugbügels 18 führt dazu, dass der Plattformrahmen 4 mit dem darauf angeordneten Magazin 3 und Gestell 2 durch sein Eigengewicht nach unten sinkt.

In den vorderen Eckbereichen des Plattformrahmens 4 befinden sich jeweils zwei Eckbleche 21, in deren nach innen weisendem Eckbereich jeweils ein Bremselement 22 in einer entsprechenden Ausnehmung aufgenommen ist. Das Bremselement 22 ist im vorliegenden Ausführungsbeispiel als höhenverstellbare Stellschraube gestaltet, so dass der Abstand zwischen dem unteren freien Ende des Bremselementes 22, welches eine Bohrung 23 in der Traverse 19 durchgreift, und der darunter liegenden Lauffläche 24 der Fahrrolle 6 eingestellt werden kann. Versuche haben gezeigt, dass die Einwirkung des Bremselementes 22 auf die Lauffläche 24 einer Fahrrolle 6 unmittelbar innerhalb kürzester Zeit zu einem Blockieren der Fahrrolle 6 führt. Es ist somit gewährleistet, dass ein in Fahrt befindlicher Transportwagen nach Loslassen des Zugbügels 18 ohne Ausrollvorgang sofort zum Stillstand kommt.

Anders konstruierte aus dem Stand der Technik bekannte Bremsvorrichtungen können ein derartiges unmittelbares Blockieren der Fahrrollen nicht gewährleisten.

Da insbesondere auf Flughäfen erhöhte Sicherheitsanforderungen bestehen und eine unter allen Rahmenbedingungen zuverlässige und schnell wirkende Bremsvorrichtung an auf Flughafenrollfeldern eingesetzten Transportwagen unabdingbar sind, ist die erfindungsgemäß gewählte Konstruktion anderen konstruktiven Gestaltungen funktionell weit überlegen.

In den Figuren 3A und 3B sind die unterschiedlichen Stellungen des Zugbügels 18 und die daraus resultierende Anordnung der Fahrrollen 6 im vorderen Bereich des Transportwagens noch einmal verdeutlicht.

Die Figur 3A zeigt dabei als Stellung II die Fahrposition mit herabgedrücktem Zugbügel 18 an. Die Fahrrollen 6 sind dabei abgesenkt, was sich durch die Position der Führungszapfen 11 im unteren Endbereich der Ausnehmungen 10 verdeutlicht. In dieser Stellung des Zugbügels 18 kann der Transportwagen problemlos gerollt werden.

In der Figur 3B ist der Zugbügel 18 in seiner Blockierstellung der Bremsvorrichtung dargestellt. Der Abstand zwischen Plattformrahmen 4 und den an der Traverse 19 angeordneten Lagerböcken 5 mit den darin gehaltenen Fahrrollen 6 ist kleiner als in der Darstellung der Figur 3A, was sich auch in der Position der Führungszapfen 11 innerhalb der Ausnehmung 10 zeigt. In dieser Stellung drückt das Bremselement 22 auf die Lauffläche 24 der vorderen Fahrrollen 6, so dass eine Drehbewegung der Fahrrollen 6 zuverlässig ausgeschlossen ist.

Erst ein Absenken des Zugbügels 18 führt zu einer Entkoppelung des Bremselementes 22 und der Lauffläche 24, so dass die Fahrrollen 6 wieder frei drehbar werden.

### Bezugszeichenliste:

- 1: Plattformaufbau
- 2: Gestell
- 3: Magazin
- 4: Plattformrahmen
- 5: Lagerbock
- 6: Fahrrolle
- 7: Haltelaschen
- 8: Profil
- 9: Drehlager
- 10: Ausnehmung
- 11: Führungszapfen
- 12: Profilteil
- 13: Schenkel
- 14: Schenkel
- 15: Verbindungssteg
- 16: Haltenase
- 17: Anschlagnocken
- 18: Zugbügel
- 19: Traverse
- 20: Halteblech
- 21: Eckblech
- 22: Bremselement
- 23: Bohrung
- 24: Lauffläche

## Patentansprüche

1. Transportwagen mit einem Plattformaufbau (1), an dessen dem Boden zugewandter Unterseite eine Mehrzahl von Fahrrollen (6) in Lagerböcken (5) drehbar aufgenommen sind, wobei mindestens zwei Fahrrollen (6) durch eine mittels eines handbetätigten Zugbügels (18) zum Verschieben des Transportwagens ansteuerbare Bremsvorrichtung derart blockierbar sind, dass ein Absenken des Zugbügels (18) in Richtung des Bodens die Blockierstellung der Bremsvorrichtung aufhebt,
**dadurch gekennzeichnet, dass**
der Zugbügel (18) am Plattformaufbau (1) in zwei Drehlagern (9) schwenkbar gelagert und mit einem Lagerrahmen, an welchem die beiden blockierbaren Fahrrollen (6) in den jeweiligen Lagerböcken (5) festgelegt sind, fest verbunden ist, wobei der Lagerrahmen (20) mittels Führungszapfen (11) in Ausnehmungen (10) am Plattformaufbau (1) vertikal verschieblich geführt ist und am Plattformaufbau (1) Bremselemente (22) angeordnet sind, welche in Blockierstellung der Bremsvorrichtung die Lauffläche (24) der jeweilig blockierbaren Fahrrolle (6) kontaktieren und wobei am Lagerrahmen (20) beidseitig je zwei vertikal übereinander angeordnete Führungszapfen (11) angeordnet sind.

2. Transportwagen nach Anspruch 1,
**dadurch gekennzeichnet, dass**
das Bremselement (22) als vertikal verstellbare Einstellschraube ausgebildet ist.

3. Transportwagen nach einem der Ansprüche 1 oder 2,
**dadurch gekennzeichnet, dass**
die Ausnehmungen (10) für die Führungszapfen (11) als Langlöcher gestaltet sind.

4. Transportwagen nach einem der Ansprüche 1 bis 3,
**dadurch gekennzeichnet, dass**
der Lagerrahmen aus einer Traverse (19) mit daran senkrecht zum Boden abstehenden an den freien Enden der Traverse (19) angeordneten Halteblechen (20) besteht, an denen jeweils ein Drehlager (9) und mindestens ein Führungszapfen (11) angeordnet sind.

## Claims

1. Transport trolley, having a platform structure (1) on whose underside, facing the ground, a plurality of castors (6) are rotatably received in bearing blocks, wherein at least two castors (6) can be blocked by a braking device that can be controlled by means of a hand-operated clamping yoke (18) for moving the transport trolley, in such a way that lowering the clamping yoke (18) in the direction of the ground raises the blocking position of the braking device,
**characterised in that**
the clamping yoke (18) is pivotably mounted on the platform structure (1) on two pivot bearings, and is fixedly connected to a bearing frame on which the two blockable castors (6) are fixed in the respective bearing blocks (5), wherein the bearing frame (20) is vertically slidably guided by means of guiding pins (11) in recesses (10) on the platform structure (1), and brake elements (22) are arranged on the platform (1), which contact the tread (24) of the respective blockable castor (6) in the blocking position of the braking device, and wherein two guiding pins (11) arranged vertically one above the other are arranged on each of the two sides of the bearing frame (20).

2. Transport trolley according to claim 1,
**characterised in that**
the brake element (22) is formed as a vertically shiftable adjusting screw.

3. Transport trolley according to one of claims 1 or 2,
**characterised in that**
the recesses (10) for the guiding pins (11) are designed as slots.

4. Transport trolley according to one of claims 1 to 3,
**characterised in that**
the bearing frame consists of a crossbeam (19), having retaining plates (20) protruding from it perpendicularly to the ground, and arranged on the free ends of the crossbeam (19), on which, respectively, a pivot bearing (9) and at least one guiding pin (11) are arranged.

## Revendications

1. Chariot de transport avec une structure de plateforme (1), au niveau du côté inférieur tourné vers le sol de laquelle une pluralité de roulettes (6) est reçue de manière rotative dans des supports de palier (5), dans lequel au moins deux roulettes (6) peuvent être bloquées par un dispositif de freinage commandable au moyen d'un étrier de traction (18) actionné à la main pour le coulissement du chariot de transport de telle manière qu'un abaissement de l'étrier de traction (18) en direction du sol supprime la position de blocage du dispositif de freinage,
**caractérisé en ce que**
l'étrier de traction (18) est logé de manière pivotante au niveau de la structure de plateforme (1) dans deux paliers rotatifs (9) et est fixement relié à un cadre de palier, auquel sont fixées les deux roulettes (6) pouvant être bloquées dans les supports de palier (5) respectifs, dans lequel le cadre de palier (20) est guidé de manière coulissante verticalement au moyen de tenons de guidage (11) dans des évidements (10) au niveau de la structure de plateforme (1) et des éléments de freinage (22) sont agencés au niveau de la structure de plateforme (1), lesquels entrent en contact en position de blocage du dispositif de freinage avec la surface de roulement (24) de la roulette (6) pouvant être bloquée respectivement et dans lequel deux tenons de guidage (11) agencés verticalement l'un au-dessus de l'autre sont agencés de part et d'autre chacun au niveau du cadre de palier (20).

2. Chariot de transport selon la revendication 1, **caractérisé en ce que**
l'élément de freinage (22) est réalisé en tant que vis de réglage réglable verticalement.

3. Chariot de transport selon l'une quelconque des revendications 1 ou 2,
**caractérisé en ce que**
les évidements (10) pour les tenons de guidage (11) sont conçus en tant que trous oblongs.

4. Chariot de transport selon l'une quelconque des revendications 1 à 3,
**caractérisé en ce que**
le cadre de palier se compose d'une traverse (19) avec des tôles de retenue (20) dépassant au niveau de celle-ci perpendiculairement au sol, agencées au niveau des extrémités libres de la traverse (19), au niveau desquelles respectivement un palier rotatif (9) et au moins un tenon de guidage (11) sont agencés.
